# EUROPÄISCHE PATENTSCHRIFT

(11) **EP 4 182 764 B1**
(45) Veröffentlichungstag und Bekanntmachung des Hinweises auf die Patenterteilung: **01.01.2025**
(21) Anmeldenummer: 21742348.2
(22) Anmeldetag: 06.07.2021
(51) Int. Cl.: G05D 1/00

(54) **STEUERUNG EINES REINIGUNGSROBOTERS**
CONTROL OF A CLEANING ROBOT
COMMANDE D'UN ROBOT DE NETTOYAGE

(30) Priorität: 16.07.2020 DE 102020208893
(43) Veröffentlichungstag der Anmeldung: 24.05.2023
(73) Patentinhaber: BSH Hausgeräte GmbH, 81739 München (DE)
(72) Erfinder: KÜHNEL, Markus, 01454 Radeberg (DE); SCHNITZER, Frank, 97616 Bad Neustadt (DE)
(86) Internationale Anmeldenummer: PCT/EP2021/068631
(87) Internationale Veröffentlichungsnummer: WO 2022/013005

(56) Entgegenhaltungen:
- EP-A2- 2 671 492
- WO-A1-2019/203878
- US-A1- 2020 047 343

## Beschreibung

Die Erfindung betrifft einen Reinigungsroboter. Insbesondere betrifft die Erfindung die Steuerung des Reinigungsroboters bezüglich eines nicht zu reinigenden Abschnitts einer Bodenfläche.

Ein Reinigungsroboter ist dazu eingerichtet, eine vorbestimmte Bodenfläche zu reinigen. Dazu kann der Reinigungsroboter die Bodenfläche selbst erkunden und eine Karte bereitstellen, die auf der Bodenfläche erfasste Hindernisse oder Begrenzungen umfasst. Bestimmte Merkmale seines Umfelds können für den Reinigungsroboter jedoch nicht erkennbar sein. Sollte beispielsweise auf einem Teppichboden ein weiterer Teppich liegen, so kann der Reinigungsroboter die beiden Untergründe möglicherweise nicht voneinander unterscheiden.

Beispielsweise beschreibt die Druckschrift WO 2018 / 158 248 A2 einen Reinigungsroboter zum Reinigen einer vorbestimmten Bodenfläche, bei der Begrenzungen Anwendung finden können, entlang derer der Reinigungsroboter steuerbar ist.

Auch die Druckschriften EP 2 671 492 A2, US 2020/047343 A1 und WO 2019/203878 A1 beschreiben vergleichbare Reinigungsroboter, die an einer Begrenzung entlangfahren.

Gelegentlich ist erwünscht, einen vorbestimmten Abschnitt der Bodenfläche nicht durch den Reinigungsroboter reinigen zu lassen. Im genannten Beispiel kann etwa der Teppichboden gereinigt werden, während der weitere Teppich nicht gereinigt werden soll, beispielsweise, weil er einen besonders langen Flor umfasst, in welchem sich der Reinigungsroboter verstricken kann. Ein Benutzer kann auf der vom Reinigungsroboter bereitgestellten Karte einen Abschnitt angeben, den der Reinigungsroboter nicht reinigen soll. Die Eingabe erfolgt üblicherweise, indem der Benutzer die Karte auf dem Bildschirm eines Mobilgeräts betrachtet und den Abschnitt beispielsweise in Form eines Rechtecks, eines Kreises oder eines Polygons definiert.

Dabei kann es für den Benutzer schwierig sein, den Abschnitt ausreichend genau zu definieren, weil das zu vermeidende Hindernis, im obigen Beispiel der langflorige Teppich, auf der Karte nicht eingetragen sein kann. Außerdem ist ein Bildschirm eines Mobilgeräts üblicherweise sehr klein, sodass eine präzise Eingabe erschwert ist. In der Folge kann der nicht zu reinigende Abschnitt zu klein definiert werden, sodass der Reinigungsroboter ihn befährt; oder zu groß, sodass um ihn herum ein ungereinigter Rand verbleiben kann, oder falsch positioniert, sodass beide genannten Probleme auftreten können.

Eine der vorliegenden Erfindung zu Grunde liegende Aufgabe besteht in der Angabe einer verbesserten Technik, um einen nicht zu reinigenden Abschnitt einer Bodenfläche für einen Bodenreinigungsroboter zu definieren. Die Erfindung löst die Aufgabe mittels der Gegenstände der unabhängigen Ansprüche. Unteransprüche geben bevorzugte Ausführungsformen wieder.

Ein Reinigungsroboter ist dazu eingerichtet, eine vorbestimmte Bodenfläche zu reinigen. Nach einem ersten Aspekt der vorliegenden Erfindung umfasst ein Verfahren zum Steuern des Reinigungsroboters Schritte des Bestimmens eines Abschnitts der Bodenfläche, dessen Bearbeitung durch den Reinigungsroboter unterschiedlich von der restlichen Bodenfläche sein soll; des Deaktivierens einer Reinigungseinrichtung des Reinigungsroboters; des Steuerns des Reinigungsroboters, entlang einer Begrenzung des Abschnitts zu fahren, wobei der Reinigungsroboter derart an der Begrenzung entlang gesteuert wird, dass er oder die Reinigungseinrichtung den bestimmten Abschnitt nicht berühren; des Erfassens einer benutzergesteuerten Bestätigung der entlang gefahrenen Begrenzung; und des Freigebens der Reinigungseinrichtung.

In einer Ausführungsform ist auf dem Abschnitt ein spezielles Reinigungsverfahren anzuwenden. Auf dem Abschnitt kann insbesondere eine schonende Reinigung gesteuert werden, beispielsweise trocken, ohne den Einsatz einer Bürste oder eines Besens, mit verringerter Häufigkeit oder verlangsamt. So kann beispielsweise verhindert werden, dass ein Teppich nass gereinigt wird oder dass sich ein Rotationselement des Reinigungsroboters in Fransen oder Troddeln eines Teppichs verfängt. In einer anderen Ausführungsform kann ein Reinigen des Abschnitts ganz unterbleiben, sodass der Abschnitt von der Bearbeitung durch den Reinigungsroboter ausgenommen ist. Im Folgenden wird stellvertretend vornehmlich auf diese Ausführungsform abgestellt.

Erfindungsgemäß kann der Reinigungsroboter praktisch demonstrieren, wo die Begrenzung des nicht zu reinigenden Abschnitts der Bodenfläche genau verläuft. Ein Benutzer kann, wenn er mit der gezeigten Begrenzung einverstanden ist, durch seine Bestätigung einen Betrieb des Reinigungsroboters auf einer restlichen Bodenfläche erlauben. Der Reinigungsroboter kann dann dazu angesteuert werden, die restliche Bodenfläche automatisch zu reinigen. Andernfalls, wenn der Benutzer nicht zufrieden ist, kann er den Abschnitt neu definieren bzw. eine bestehende Definition abändern und optional ein erneutes Abfahren der Begrenzung des Abschnitts durch den Reinigungsroboter anfordern. Der Benutzer kann die eingegebene Definition auch verwerfen. Erfindungsgemäß kann der Abschnitt auf diese Weise schneller und mit größerer Präzision definiert werden. Der Benutzer kann während des Abfahrens der Begrenzung unmittelbar entscheiden, ob diese gut gewählt ist oder einer Nachbesserung bedarf.

Es ist bevorzugt, dass der Abschnitt bezüglich einer Karte bestimmt wird, die den vorbestimmten Abschnitt abbildet. Beispielsweise kann der Abschnitt als Rechteck, Ellipse oder Polygon auf der Karte definiert werden. Ein nicht zu reinigender oder nicht zu befahrender Abschnitt oder Bereich kann auch No-Go-Bereich genannt werden. Mehrere No-Go-Bereiche können automatisch zusammengelegt werden, wenn sie einander überlappen oder so nahe aneinander liegen, dass zwischen ihnen der Reinigungsroboter nicht passieren kann. In ähnlicher Weise kann ein No-Go-Bereich mit einem anderen Bereich kombiniert werden, der ein Hindernis auf der Bodenfläche repräsentiert. Ein No-Go-Bereich kann auch mit einer Begrenzung der Bodenfläche kombiniert werden.

Es ist besonders bevorzugt, dass die Karte auf der Basis von Abtastungen der Bodenfläche bestimmt ist, die durch den Reinigungsroboter erfolgt sind. Der Reinigungsroboter orientiert sich im üblichen Betrieb an Kartendaten, die er selbst anfertigt oder mit selbst abgetasteten Informationen anreichert. Durch die Verwendung dieser Karte für die Bestimmung des nicht zu reinigenden Abschnitts der Bodenfläche kann ein Fehler bei der Eingabe verkleinert sein. Die Bestimmung des Abschnitts kann repräsentativer oder realistischer als bisher bekannt sein.

In einer weiteren Ausführungsform wird der Reinigungsroboter gesteuert, mit verringerter Geschwindigkeit entlang der Begrenzung zu fahren. Anders ausgedrückt kann eine Geschwindigkeit, mit welcher der Reinigungsroboter entlang der Begrenzung fährt, vorbestimmt sein, wobei die vorbestimmte Geschwindigkeit geringer als eine Marschgeschwindigkeit sein kann, mit welcher der Reinigungsroboter sich üblicherweise von einem Ort zu einem anderen bewegt, oder geringer als eine Fahrgeschwindigkeit, mit der er sich während eines Reinigungsvorgangs bewegt. Dadurch kann einem Benutzer mehr Zeit eingeräumt werden, den genauen Verlauf der Begrenzung des Abschnitts während des Abfahrens zu kontrollieren bzw. das Abfahren vorzeitig zu unterbrechen, falls sich eine Kollision oder Überschneidung mit einem auszusparenden Objekt anbahnt.

In einer anderen Ausführungsform ist eine Geschwindigkeit des Reinigungsroboters während des Fahrens entlang der Begrenzung durch einen Benutzer steuerbar. Die Geschwindigkeit kann bevorzugt während des Fahrens verändert werden, sodass der Benutzer beispielsweise eine geringe Geschwindigkeit wählen kann, wenn es ihm auf eine genaue Beobachtung ankommt, und eine höhere, wenn er mit der Begrenzung bereits zufrieden ist oder er kein Problem erwartet.

Erfindungsgemäß wird der Reinigungsroboter derart an der Begrenzung entlang gesteuert, dass er den bestimmten Abschnitt nicht berührt. Dabei soll der Abstand des Reinigungsroboters zum Abschnitt möglichst minimiert sein. So kann sichergestellt sein, dass der Abschnitt in keiner Weise durch den Reinigungsroboter tangiert wird. Alternativ wird der Reinigungsroboter erfindungsgemäß derart an der Begrenzung entlang gesteuert, dass nur die Reinigungseinrichtung den bestimmten Abschnitt nicht berührt. Das Befahren des Abschnitts kann dabei erlaubt sein. Insbesondere ein Abschnitt der Reinigungseinrichtung, der in unmittelbarer Nähe der Bodenfläche liegt, kann den bestimmten Abschnitt dabei nicht berühren. Auch hier ist bevorzugt, dass der Abstand der Reinigungseinrichtung zum Abschnitt minimiert ist. Dadurch kann verbessert ein Bereich zwischen einem auf der Bodenfläche liegenden Gegenstand, der nicht gereinigt werden soll, und einem Bereich, der gereinigt werden soll, verringert sein. Ist die Reinigungseinrichtung beispielsweise schmaler als der Reinigungsroboter, so kann der Reinigungsroboter den vorbestimmten Abschnitt der Bodenfläche befahren, solange die Reinigungseinrichtung nicht in den Abschnitt eindringt.

In noch einer weiteren Ausführungsform wird der Abschnitt bestimmt, indem der Reinigungsroboter auf der Basis von benutzergesteuerten Eingaben entlang einer Begrenzung des Abschnitts gesteuert wird. Die Steuerung kann insbesondere nach Art einer Fernsteuerung erfolgen, die beispielsweise eine Veränderung von Richtung und/oder Geschwindigkeit des Reinigungsroboters erlauben kann. Ein derartiger Vorgang kann auch Teach-in genannt werden.

In noch einer weiteren Ausführungsform wird eine benutzergesteuerte Änderung des Abschnitts bestimmt, wobei der Reinigungsroboter gesteuert wird, einen geänderten Abschnitt der Begrenzung des Abschnitts entlang zu fahren. Insbesondere kann der Reinigungsroboter gesteuert werden, nur den geänderten Abschnitt der Begrenzung entlang zu fahren. Eine Detailarbeit bei der Bestimmung eines nicht zu reinigenden Abschnitts der Bodenfläche kann dadurch unterstützt sein. Ein Test, ob der bestimmte Abschnitt den Vorstellungen des Benutzers entspricht, kann durch das selektive Abfahren nur des veränderten Abschnitts seiner Begrenzung deutlich schneller erfolgen.

In einer weiteren Ausführungsform wird der Reinigungsroboter gesteuert, während des Fahrens entlang der Begrenzung einen Hinweis darauf zu geben, welche Seite der befahrenen Begrenzung von dem Abschnitt umfasst ist. Dadurch kann eine versehentliche Umkehrung vermieden werden, bei der ein zu reinigender und ein nicht zu reinigender Abschnitt der Bodenfläche miteinander vertauscht werden. Dies kann beispielsweise passieren, wenn ein nicht zu reinigender Abschnitt der Bodenfläche komplex ist, etwa weil er mit einem oder mehreren weiteren Abschnitten, Hindernissen oder Begrenzungen zusammengelegt wurde. Auch wenn der Abschnitt auf der Basis einer Entscheidung bestimmt ist, die auf der Bodenfläche nicht wahrnehmbar ist, beispielsweise wenn nur ein östlicher Teil eines Zimmers gereinigt werden soll, kann der Hinweis dazu beitragen, eine Fehldefinition zu vermeiden.

Es ist allgemein bevorzugt, dass der Reinigungsroboter nur entlang einer Begrenzung gefahren wird, die zwischen dem nicht zu reinigenden Bereich und einem zu reinigenden Bereich liegt. Anders ausgedrückt kann lediglich der Teil der Begrenzung abgefahren werden, der zumindest einseitig zugänglich ist und sich nicht beispielsweise entlang einer Wand oder eines Hindernisses erstreckt.

Nach einem zweiten Aspekt der vorliegenden Erfindung umfasst eine Steuervorrichtung für einen Reinigungsroboter, der dazu eingerichtet ist, eine vorbestimmte Bodenfläche zu bearbeiten, eine Bestimmungseinrichtung zur Bestimmung eines Abschnitts der Bodenfläche, der nicht gereinigt werden soll; eine Verarbeitungseinrichtung, die dazu eingerichtet ist, eine Reinigungseinrichtung des Reinigungsroboters zu deaktivieren und den Reinigungsroboter zu steuern, derart entlang einer Begrenzung des Abschnitts zu fahren, dass der Reinigungsroboter oder die Reinigungseinrichtung den bestimmten Abschnitt nicht berühren; und eine Eingabevorrichtung für eine benutzergesteuerte Bestätigung der entlang gefahrenen Begrenzung. Dabei ist die Verarbeitungseinrichtung bevorzugt ferner dazu eingerichtet, in Antwort auf eine erfasste benutzergesteuerte Bestätigung der entlang gefahrenen Begrenzung die Reinigungseinrichtung freizugeben.

Die Verarbeitungseinrichtung kann dazu eingerichtet sein, ein hierin beschriebenes Verfahren ganz oder teilweise auszuführen. Dazu kann die Verarbeitungseinrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Nach einem dritten Aspekt der vorliegenden Erfindung umfasst ein Reinigungsroboter eine hierin beschriebene Steuervorrichtung. Der Reinigungsroboter kann eine Reinigungseinrichtung umfassen, die in einer besonders bevorzugten Ausführungsform eine Saugeinrichtung, eine Wischeinrichtung und/oder eine Kehreinrichtung umfasst. Anders ausgedrückt kann der Reinigungsroboter einen Staubsaugroboter oder einen Kehrroboter umfassen. Die Wischeinrichtung kann zum Befeuchten der Bodenfläche eingerichtet sein. Auch eine kombinierte Ausführungsform, die beispielsweise zum Staubsaugen und zum Kehren eingerichtet ist, ist vorstellbar. Der Reinigungsroboter ist bevorzugt zum Einsatz in einem Haushalt vorgesehen. In einer weiteren Ausführungsform kann der Reinigungsroboter auch beispielsweise zum Reinigen einer Industriefläche oder einer Bodenfläche eines Büros eingesetzt werden.

Nach noch einem weiteren Aspekt der vorliegenden Erfindung umfasst ein System einen hierin beschriebenen Reinigungsroboter und eine mobile Bedieneinheit mit einer Ausgabevorrichtung zur Ausgabe einer Umgebungskarte des Reinigungsroboters und einer Eingabevorrichtung zur Eingabe eines Abschnitts der Bodenfläche, der nicht gereinigt werden soll; sowie zur Eingabe einer benutzergesteuerten Bestätigung. Die Bedieneinheit ist bevorzugt drahtlos mit der Steuervorrichtung verbunden. Insbesondere kann die Bedieneinheit durch ein Mobilgerät wie ein Smartphone, einen Tabletcomputer oder einen Laptopcomputer gebildet sein, auf dem ein entsprechendes Computerprogramm installiert ist.

Die Erfindung wird nun unter Bezug auf die beiliegenden Figuren genauer beschrieben, in denen:
- Figur 1: ein System mit einem Reinigungsroboter;
- Figur 2: eine beispielhafte Karte einer Bodenfläche; und
- Figur 3: ein Ablaufdiagramm eines Verfahrens
darstellt.

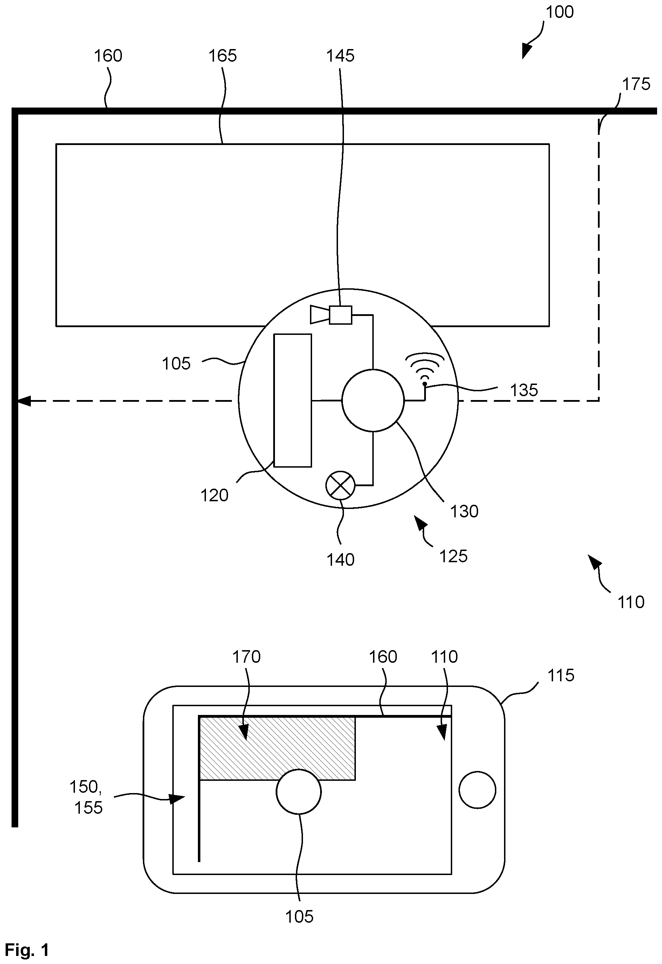

Figur 1 zeigt ein System 100 mit einem Reinigungsroboter 105, der zum Reinigen einer Bodenfläche 110 eingerichtet ist, und einer optionalen, mobilen Bedieneinheit 115, die vorliegend beispielhaft als Smartphone ausgebildet ist.

Der Reinigungsroboter 105 ist dazu eingerichtet, über die Bodenfläche 110 zu fahren und einen in seinem Bereich liegenden Abschnitt der Bodenfläche 110 mittels einer Reinigungseinrichtung 120 zu reinigen. Die Reinigungseinrichtung 120 umfasst beispielsweise ein Saugwerk, eine Wischeinrichtung, insbesondere mit einer Befeuchtungseinrichtung und/oder eine Kehreinrichtung, beispielsweise mit einer rotierenden Borstenwalze, oder eine Kombination aus beiden Einrichtungen. Die Reinigungseinrichtung 120 ist üblicherweise schmaler als der Reinigungsroboter 105 ausgeführt. Eine Steuerung des Reinigungsroboters 105 erfolgt bevorzugt mittels einer Steuervorrichtung 125.

Die Steuervorrichtung 125 umfasst bevorzugt eine Verarbeitungseinrichtung 130 und eine optionale Kommunikationseinrichtung 135, die dazu eingerichtet ist, mit der Bedieneinheit 115 zu kommunizieren. In einer anderen Ausführungsform sind Elemente der Bedieneinheit 115 vom Reinigungsroboter 105 umfasst und die Kommunikationseinrichtung 135 kann entfallen. Die Verarbeitungseinrichtung 130 ist bevorzugt weiter dazu eingerichtet, einen Betrieb der Reinigungseinrichtung 120 zu steuern. Außerdem können ein oder mehrere Indikatoren 140 vorgesehen sein, um beispielsweise einen rechten oder linken Bereich der Bodenfläche 110 bezüglich einer Fahrtrichtung des Reinigungsroboters 105 anzuzeigen. Ein Indikator 140 kann beispielsweise optisch ausgeführt sein und eine Lampe oder eine Leuchtdiode umfassen. Weiter bevorzugt ist die Verarbeitungseinrichtung 130 mit einem Sensor 145 verbunden, der dazu eingerichtet ist, ein Umfeld des Reinigungsroboters 105 abzutasten. Auf der Basis von Abtastungen des Sensors 145 kann eine Karte des Umfelds erstellt werden. Die Karte kann in einem Datenspeicher abgelegt werden, die von der Verarbeitungseinrichtung 130 umfasst sein kann.

Die Bedieneinheit 115 umfasst bevorzugt eine Ausgabevorrichtung 150 und eine Eingabevorrichtung 155, die vorliegend miteinander kombiniert als Touchscreen ausgeführt sind. Die Ausgabevorrichtung 150 ist dazu eingerichtet, die genannte Karte optisch darzustellen. Die Eingabevorrichtung 155 ist dazu eingerichtet, verschiedene Eingaben eines Benutzers, insbesondere bezüglich der Karte und/oder einer Steuerung des Reinigungsroboters 105, zu erfassen.

Die Bodenfläche 110 kann an einer oder mehreren Seiten durch eine Wand 160 begrenzt sein. Beispielsweise aufgrund eines Objekts 165 auf der Bodenfläche 110 kann es gewünscht sein, einen das Objekt 165 abdeckenden Abschnitt 170 der Bodenfläche 110 nicht durch den Reinigungsroboter 105 reinigen zu lassen. Ein Benutzer kann mittels der Eingabevorrichtung 155 den Abschnitt 170 bezüglich der dargestellten Karte definieren. Dabei kann das Objekt 165 nicht von der Karte umfasst sein und der definierte Abschnitt 170 ist üblicherweise in der Realität nicht sichtbar. Es wird vorgeschlagen, eine Begrenzung 175 zu bestimmen, die zwischen dem Abschnitt 170 und einem restlichen, durch den Reinigungsroboter 105 zu bearbeitendem Teil der Bodenfläche 110 besteht. Der Reinigungsroboter 105 kann dann dazu angesteuert werden, entlang der Begrenzung 175 zu fahren, während die Reinigungseinrichtung 120 deaktiviert ist. Ein Benutzer kann sich dabei davon überzeugen, dass der Abschnitt 170 korrekt gewählt ist. Er kann den Abschnitt 170 bzw. die abgefahrene Begrenzung 175 mittels der Eingabevorrichtung 155 bestätigen, sodass die Steuervorrichtung 125 den definierten Abschnitt 170 bei einem folgenden Bearbeitungsvorgang der Bodenfläche 110 ausspart.

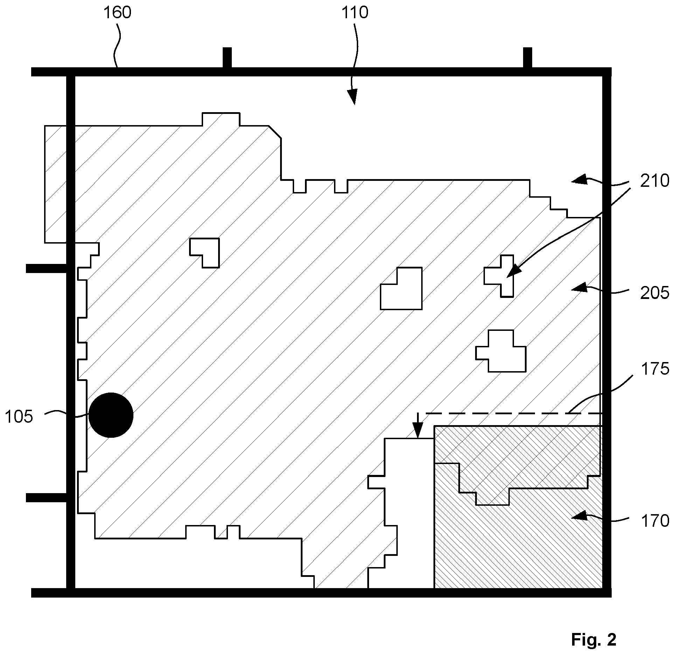

Figur 2 zeigt eine beispielhafte Karte 200 einer Bodenfläche 110. Die Karte 200 repräsentiert eine Draufsicht auf einen Abschnitt eines Gebäudes, insbesondere eines Wohngebäudes. Der Reinigungsroboter 105 hat den gezeigten Bereich befahren und mittels seiner Sensoren 145 abgetastet. Dadurch hat er einen befahrbaren Bereich 205 bestimmt, der durch Wände 160 begrenzt ist. Nicht befahrbare Bereiche 210 ergeben sich durch Hindernisse, beispielsweise Möbel.

Ein Abschnitt 170 soll auf Wunsch eines Benutzers nicht befahren werden. Teile dieses Abschnitts 170 sind bereits vom nicht befahrbaren Bereich 210 umfasst. Durch die Definition des Abschnitts 170 wird eine Begrenzung 175 festgelegt, die sich in dem Bereich erstreckt, an dem der Abschnitt 170 an den befahrbaren Bereich 205 verkleinert.

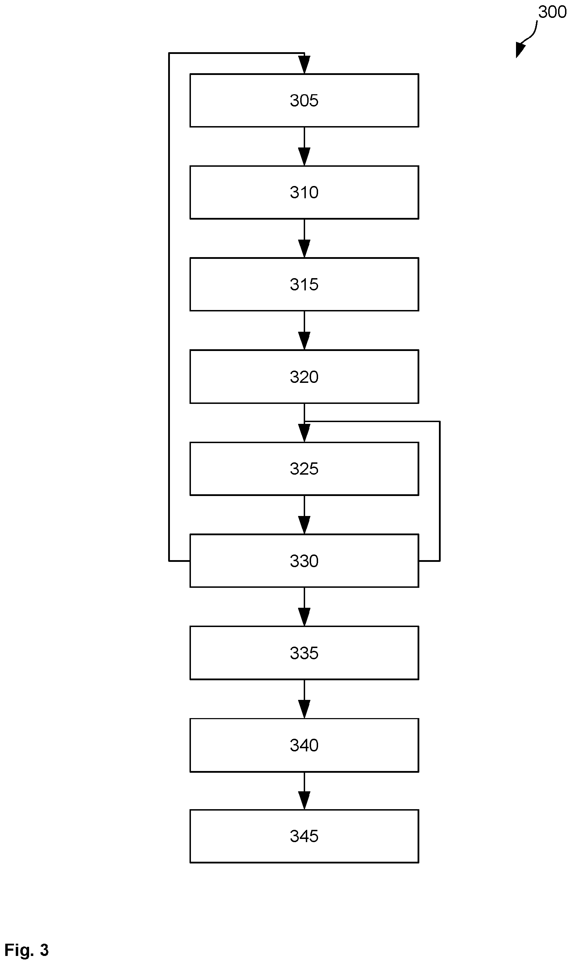

Figur 3 zeigt ein Ablaufdiagramm eines Verfahrens 300 zur Steuerung eines Reinigungsroboters 105. Es wird davon ausgegangen, dass vor Beginn des dargestellten Verfahrens 300 bereits eine ausreichend genaue Karte oder Umgebungskarte 200 einer Bodenfläche 110 vorliegt, die durch den Reinigungsroboter 105 gereinigt werden kann. Diese Karte 200 kann insbesondere durch Abtastungen des Reinigungsroboters 105 während eines systematischen oder erratischen Befahrens der Bodenfläche 110 gesammelt worden sein.

In einem Schritt 305 kann eine Festlegung eines Abschnitts 170 durch einen Benutzer erfasst werden. In einem Schritt 310 kann die Begrenzung 175 des Abschnitts 170 bestimmt werden. Bevorzugt wird nur ein Abschnitt der Begrenzung 175 bestimmt, der zumindest einseitig durch den Reinigungsroboter 105 befahrbar ist. Ein Teil der Begrenzung 175, der zu nah an einer Wand 160, einem nicht befahrbaren Bereich 210 oder einem bekannten Hindernis liegt, kann vernachlässigt werden. Optional kann die Begrenzung 175 bestimmt werden, nachdem der festgelegte Abschnitt 170 mit einem weiteren, zuvor festgelegten Abschnitt 170 verschmolzen wurde. Auch ein nicht befahrbarer Bereich 210 oder eine Begrenzung der Bodenfläche 110, beispielsweise in Form einer Wand 160, können bei der Bestimmung der Begrenzung 175 berücksichtigt werden.

In einem optionalen Schritt 315 kann ein Abschnitt der Begrenzung 175 bestimmt werden, der durch die vorliegende Eingabe des Benutzers gegenüber einer vorhergehenden Version verändert wurde. In diesem Fall kann die Begrenzung 175 temporär auf den veränderten Bereich reduziert werden.

In einem Schritt 320 kann die Bearbeitungseinrichtung 120 deaktiviert werden. Anschließend kann der Reinigungsroboter 105 in einem Schritt 325 entlang der Begrenzung 175 gesteuert werden. Dabei kann mittels des Indikators 140 ein Hinweis auf diejenige Seite der Begrenzung 175 gegeben werden, die im üblichen Betrieb nicht bearbeitet werden soll. Auch eine umgekehrte Anzeige der Seite der Begrenzung 175, die bearbeitet werden soll, ist möglich. Zum Abfahren der Begrenzung 175 kann der Reinigungsroboter 105 zunächst an ein erstes Ende der Begrenzung 175 gefahren werden und von dort aus der Begrenzung 175 folgen. Während des Abfahrens der Begrenzung 175 ist bevorzugt, eine Fahrgeschwindigkeit so zu wählen, dass eine Beurteilung von Lage und Größe des Abschnitts 170 auf der realen Bodenfläche 110 durch einen Benutzer erleichtert ist. In einer Ausführungsform kann der Benutzer die Geschwindigkeit des Reinigungsroboters 105 selbst steuern. In einer anderen Ausführungsform kann die Geschwindigkeit auf einen vorbestimmten Wert festgelegt sein. Dieser Wert entspricht bevorzugt einer langsamen Bewegung.

In einem Schritt 330 kann eine Eingabe eines Benutzers mittels der Eingabevorrichtung 155 erfasst werden. Die Eingabe kann beispielsweise während des Abfahrens der Begrenzung 175 erfasst werden und ein Unterbrechen oder Anhalten des Reinigungsroboters 105 bewirken. Ist der Benutzer beispielsweise mit dem festgelegten Abschnitt 170 auf Grund des bisherigen Abfahrens der Begrenzung 175 unzufrieden, so kann er den Abschnitt 170 verändern, wobei das Verfahren 300 zum Schritt 305 zurückkehren kann. In einer weiteren Ausführungsform kann die Eingabe eine Korrektur der Begrenzung 175 umfassen, während der Reinigungsroboter 105 die Begrenzung 175 befährt. Hat der Reinigungsroboter 105 die gesamte Begrenzung 175 oder den zuvor bestimmten Abschnitt der Begrenzung 175 abgefahren, so kann eine Bestätigung des Benutzers erfasst werden, dass er mit der abgefahrenen Begrenzung 175 bzw. dem dazu korrespondierenden Abschnitt 170 einverstanden ist. Optional kann der Benutzer auch ein erneutes Abfahren der Begrenzung 175 wünschen. In noch einer weiteren Ausführungsform kann eine Zustimmung des Benutzers angenommen werden, wenn eine Eingabe nicht innerhalb einer vorbestimmten Zeit erfasst werden kann.

In einem Schritt 335 kann der Reinigungsroboter 105 dazu angesteuert werden, an eine vorbestimmte Position zurückzukehren. Diese Position kann insbesondere an einer Basisstation liegen, an welcher der Reinigungsroboter 105 beispielsweise mit elektrischer Energie versorgt oder von aufgesammelten Schmutzpartikeln befreit werden kann.

In einem Schritt 340 kann, falls dies nicht bereits erfolgt ist, der bestimmte Abschnitt 170 übernommen werden. Das bedeutet, dass der bestimmte Abschnitt 170 bei einer folgenden Reinigungsfahrt über die Bodenfläche 110 ausgespart wird. Optional kann der bestimmte Abschnitt 170 auch verworfen werden, falls er nicht durch einen Benutzer explizit bestätigt wurde, bevor der Reinigungsroboter 105 an die vorbestimmte Position zurückgekehrt ist.

In einem Schritt 345 kann die Bearbeitungseinrichtung 120 wieder freigegeben werden. Im Folgenden kann eine Reinigung der Bodenfläche 110 mittels des Reinigungsroboters 105 gesteuert werden.

Es ist zu beachten, dass die dargestellten Schritte des Verfahrens 300 nicht alle verpflichtend sind und nicht notwendigerweise in der dargestellten Reihenfolge erfolgen müssen. Insbesondere die Schritte 335 bis 345 können einzeln auch entfallen oder in einer anderen Reihenfolge durchgeführt werden.

### Bezugszeichen

- 100: System
- 105: Reinigungsroboter
- 110: Bodenfläche
- 115: Bedieneinheit
- 120: Reinigungseinrichtung
- 125: Steuervorrichtung
- 130: Verarbeitungseinrichtung
- 135: Kommunikationseinrichtung
- 140: Indikator
- 145: Sensor
- 150: Ausgabevorrichtung
- 155: Eingabevorrichtung
- 160: Wand
- 165: Objekt
- 170: Abschnitt
- 175: Begrenzung

- 200: Karte
- 205: befahrbarer Bereich
- 210: nicht befahrbarer Bereich

- 300: Verfahren
- 305: Festlegen No-Go Abschnitt
- 310: Begrenzung bestimmen
- 315: Veränderten Abschnitt der Begrenzung bestimmen
- 320: Bearbeitungseinrichtung deaktivieren
- 325: Reinigungsroboter entlang Begrenzung steuern
- 330: Eingabe erfassen
- 335: Rückkehr zur Basisstation
- 340: No-Go-Abschnitt übernehmen
- 345: Bearbeitungseinrichtung freigeben

## Patentansprüche

1. Verfahren (300) zum Steuern eines Reinigungsroboters (105), der dazu eingerichtet ist, eine vorbestimmte Bodenfläche (110) zu reinigen, wobei das Verfahren (300) folgende Schritte umfasst:
- Bestimmen (305) eines Abschnitts (170) der Bodenfläche (110), dessen Bearbeitung durch den Reinigungsroboter (105) unterschiedlich von der restlichen Bodenfläche sein soll;
- Deaktivieren (320) einer Reinigungseinrichtung (120) des Reinigungsroboters (105);
- Steuern (325) des Reinigungsroboters (105), entlang einer Begrenzung (175) des Abschnitts (170) zu fahren;
- Erfassen (330) einer benutzergesteuerten Bestätigung der entlang gefahrenen Begrenzung (175); und
- Freigeben (345) der Reinigungseinrichtung, **dadurch gekennzeichnet, dass**
- der Reinigungsroboter (105) derart an der Begrenzung (175) entlang gesteuert wird, dass er oder die Reinigungseinrichtung (120) den bestimmten Abschnitt (170) nicht berühren.

2. Verfahren (300) nach Anspruch 1, wobei der Abschnitt (170) bezüglich einer Karte (200) bestimmt wird, die den vorbestimmten Abschnitt abbildet.

3. Verfahren (300) nach Anspruch 2, wobei die Karte (200) auf der Basis von Abtastungen der Bodenfläche (110) bestimmt ist, die durch den Reinigungsroboter (105) erfolgt sind.

4. Verfahren (300) nach einem der vorangehenden Ansprüche, wobei der Reinigungsroboter (105) gesteuert wird, mit verringerter Geschwindigkeit entlang der Begrenzung (175) zu fahren.

5. Verfahren (300) nach einem der Ansprüche 1 bis 3, wobei eine Geschwindigkeit des Reinigungsroboters (105) während des Fahrens entlang der Begrenzung (175) durch einen Benutzer steuerbar ist.

6. Verfahren (300) nach einem der vorangehenden Ansprüche, wobei der Abschnitt (170) bestimmt wird, indem der Reinigungsroboter (105) auf der Basis von benutzergesteuerten Eingaben entlang einer Begrenzung (175) des Abschnitts (170) gesteuert wird.

7. Verfahren (300) nach einem der vorangehenden Ansprüche, wobei der Reinigungsroboter (105) gesteuert wird, während des Fahrens entlang der Begrenzung (175) einen Hinweis darauf zu geben, welche Seite der befahrenen Begrenzung (175) von dem Abschnitt (170) umfasst ist.

8. Steuervorrichtung (125) für einen Reinigungsroboter (105), der dazu eingerichtet ist, eine vorbestimmte Bodenfläche (110) zu bearbeiten, wobei die Steuervorrichtung (125) folgendes umfasst:
- eine Bestimmungseinrichtung (155) zur Bestimmung eines Abschnitts (170) der Bodenfläche (110), dessen Bearbeitung durch den Reinigungsroboter unterschiedlich von der restlichen Bodenfläche sein soll;
- eine Verarbeitungseinrichtung (130), die dazu eingerichtet ist, eine Reinigungseinrichtung (120) des Reinigungsroboters (105) zu deaktivieren und den Reinigungsroboter (105) zu steuern, entlang einer Begrenzung (175) des Abschnitts (170) zu fahren; und
- eine Eingabevorrichtung (155) für eine benutzergesteuerte Bestätigung der entlang gefahrenen Begrenzung (175);
- wobei die Verarbeitungseinrichtung (130) ferner dazu eingerichtet ist, in Antwort auf eine erfasste benutzergesteuerte Bestätigung der entlang gefahrenen Begrenzung (175) die Reinigungseinrichtung (120) freizugeben, **dadurch gekennzeichnet, dass**
- die Verarbeitungseinrichtung (130) dazu eingerichtet ist, den Reinigungsroboter (105) derart an der Begrenzung (175) entlang zu steuern, dass er oder die Reinigungseinrichtung (120) den bestimmten Abschnitt (170) nicht berühren.

9. Reinigungsroboter (105), umfassend eine Steuervorrichtung (125) nach Anspruch 8.

10. Reinigungsroboter (105) nach Anspruch 9, ferner umfassend eine Reinigungseinrichtung (120), die eine Saugeinrichtung, eine Wischeinrichtung und/oder eine Kehreinrichtung umfasst.

11. System (100), umfassend einen Reinigungsroboter (105) nach Anspruch 9 oder 10 und eine mobile Bedieneinheit (115) mit einer Ausgabevorrichtung (150) zur Ausgabe einer Umgebungskarte (200) des Reinigungsroboters (105) und einer Eingabevorrichtung (155) zur Eingabe eines Abschnitts (170) der Bodenfläche (110), der nicht gereinigt werden soll; sowie zur Eingabe einer benutzergesteuerten Bestätigung.

## Claims

1. Method (300) for controlling a cleaning robot (105), which is configured to clean a predetermined floor area (110), wherein the method (300) comprises the following steps:
- determining (305) a section (170) of the floor area (110), the processing of which by the cleaning robot (105) is to be different from the remaining floor area;
- deactivating (320) a cleaning facility (120) of the cleaning robot (105);
- controlling (325) the cleaning robot (105) to travel along a boundary (175) of the section (170);
- detecting (330) a user-controlled confirmation of the boundary (175) travelled along; and
- enabling (345) the cleaning facility, **characterised in that**
- the cleaning robot (105) is controlled along the boundary (175) in such a manner that it or the cleaning facility (120) does not touch the determined section (170).

2. Method (300) according to claim 1, wherein the section (170) is determined in relation to a map (200) which maps the predetermined section.

3. Method (300) according to claim 2, wherein the map (200) is determined on the basis of scans of the floor area (110) that have been carried out by the cleaning robot (105).

4. Method (300) according to one of the preceding claims, wherein the cleaning robot (105) is controlled to travel along the boundary (175) at a reduced speed.

5. Method (300) according to one of claims 1 to 3, wherein a speed of the cleaning robot (105) can be controlled by a user while it is traveling along the boundary (175).

6. Method (300) according to one of the preceding claims, wherein the section (170) is determined by the cleaning robot (105) being controlled along a boundary (175) of the section (170) on the basis of user-controlled inputs.

7. Method (300) according to one of the preceding claims, wherein, while traveling along the boundary (175), the cleaning robot (105) is controlled to give an indication of which side of the travelled boundary (175) is included in the section (170).

8. Control apparatus (125) for a cleaning robot (105), which is configured to process a predetermined floor area (110), wherein the control apparatus (125) comprises the following:
- a determining facility (155) for determining a section (170) of the floor area (110), the processing of which by the cleaning robot is to be different from the remaining floor area;
- a processing facility (130), which configured to deactivate a cleaning facility (120) of the cleaning robot (105) and to control the cleaning robot (105) to travel along a boundary (175) of the section (170); and
- an input apparatus (155) for a user-controlled confirmation of the boundary (175) travelled along;
- wherein the processing facility (130) is further configured to enable the cleaning facility (120) in response to a detected user-controlled confirmation that the boundary (175) has been travelled along, **characterised in that**
- the processing facility (130) is configured to control the cleaning robot (105) along the boundary (175) in such a manner that it or the cleaning facility (120) does not touch the determined section (170).

9. Cleaning robot (105), comprising a control apparatus (125) according to claim 8.

10. Cleaning robot (105) according to claim 9, further comprising a cleaning facility (120), which comprises a suction facility, a mopping facility and/or a sweeping facility.

11. System (100), comprising a cleaning robot (105) according to claim 9 or 10 and a mobile operating unit (115) with an output apparatus (150) for outputting an environment map (200) of the cleaning robot (105) and an input apparatus (155) for inputting a section (170) of the floor area (110) that is not to be cleaned, and also for inputting a user-controlled confirmation.

## Revendications

1. Procédé (300) pour la commande d'un robot de nettoyage (105) aménagé pour nettoyer une surface de sol prédéterminée (110), dans lequel le procédé (300) comprend les étapes suivantes :
- détermination (305) d'une section (170) de la surface de sol (110) dont le traitement par le robot de nettoyage (105) doit être différent du reste de la surface de sol ;
- désactivation (320) d'un dispositif de nettoyage (120) du robot de nettoyage (105) ;
- commande (325) du robot de nettoyage (105) pour qu'il se déplace le long d'une limite (175) de la section (170) ;
- détection (330) d'une confirmation, commandée par l'utilisateur, de la limite (175) parcourue ; et
- déclenchement (345) du dispositif de nettoyage, **caractérisé en ce que**
- le robot de nettoyage (105) est commandé le long de la limite (175) de telle sorte que lui-même ou le dispositif de nettoyage (120) ne touche pas la section déterminée (170).

2. Procédé (300) selon la revendication 1, dans lequel la section (170) est déterminée par rapport à une carte (200) qui représente la section prédéterminée.

3. Procédé (300) selon la revendication 2, dans lequel la carte (200) est déterminée sur la base de balayages de la surface de sol (110) effectués par le robot de nettoyage (105).

4. Procédé (300) selon l'une des revendications précédentes, dans lequel le robot de nettoyage (105) est commandé pour se déplacer à vitesse réduite le long de la limite (175).

5. Procédé (300) selon l'une des revendications 1 à 3, dans lequel une vitesse du robot de nettoyage (105) peut être commandée par un utilisateur durant le déplacement le long de la limite (175).

6. Procédé (300) selon l'une des revendications précédentes, dans lequel la section (170) est déterminée en commandant le robot de nettoyage (105) le long d'une limite (175) de la section (170) sur la base de saisies commandées par l'utilisateur.

7. Procédé (300) selon l'une des revendications précédentes, dans lequel le robot de nettoyage (105) est commandé pour fournir, durant le déplacement le long de la limite (175), une indication quant au côté de la limite (175) parcourue compris par la section (170).

8. Dispositif de commande (125) pour un robot de nettoyage (105) aménagé pour traiter une surface de sol prédéterminée (110), dans lequel le dispositif de commande (125) comprend :
- un dispositif de détermination (155) pour la détermination d'une section (170) de la surface de sol (110) dont le traitement par le robot de nettoyage doit être différent du reste de la surface de sol ;
- un dispositif de traitement (130) aménagé pour désactiver un dispositif de nettoyage (120) du robot de nettoyage (105) et pour commander le robot de nettoyage (105) pour qu'il se déplace le long d'une limite (175) de la section (170) ; et
- un dispositif de saisie (155) pour une confirmation, commandée par l'utilisateur, de la limite (175) parcourue ;
- dans lequel le dispositif de traitement (130) est en outre aménagé pour déclencher le dispositif de nettoyage (120) en réponse à une confirmation, commandée par l'utilisateur, détectée de la limite (175) parcourue, **caractérisé en ce que**
- le dispositif de traitement (130) est aménagé pour commander le robot de nettoyage (105) le long de la limite (175) de telle sorte que lui-même ou le dispositif de nettoyage (120) ne touche pas la section déterminée (170).

9. Robot de nettoyage (105) comprenant un dispositif de commande (125) selon la revendication 8.

10. Robot de nettoyage (105) selon la revendication 9, comprenant en outre un dispositif de nettoyage (120) qui comprend un dispositif d'aspiration, un dispositif de passage de serpillière et/ou un dispositif de balayage.

11. Système (100), comprenant un robot de nettoyage (105) selon la revendication 9 ou 10 et une unité de commande mobile (115) avec un dispositif d'émission (150) pour l'émission d'une carte d'environnement (200) du robot de nettoyage (105) et un dispositif de saisie (155) pour la saisie d'une section (170) de la surface de sol (110) qui ne doit pas être nettoyée ; ainsi que pour la saisie d'une confirmation commandée par l'utilisateur.
